# EUROPÄISCHE PATENTSCHRIFT

(11) **EP 0 867 115 B1**
(45) Veröffentlichungstag und Bekanntmachung des Hinweises auf die Patenterteilung: **12.03.2003**
(21) Anmeldenummer: 98105272.3
(22) Anmeldetag: 24.03.1998
(51) Int. Cl.: A01N 37/36, A01N 35/02

(54) **Mikrobizides Mittel und dessen Anwendung**
Microbicidal composition and its use.
Composition microbicide et son emploi.

(30) Priorität: 27.03.1997 DE 19713031
(43) Veröffentlichungstag der Anmeldung: 30.09.1998
(73) Patentinhaber: B. Braun Medical AG, 6021 Emmenbrücke (CH)
(72) Erfinder: Arndt, Andreas, 6210 Sursee (CH); Hintzpeter, Matthias, Dr., 6203 Sempach-Station (CH); Wolf, Thomas, Dr., 6280 Hochdorf (CH); Peier, Hansjörg, 4600 Olten (CH); Wanner, Monika, 6218 Ettiswil (CH)
(74) Vertreter: Weber, Thomas, Dr.Dipl.-Chem.

(56) Entgegenhaltungen:
- EP-A- 0 268 873
- WO-A-90/06677
- WO-A-94/03060

## Beschreibung

Gegenstand der Erfindung ist ein mikrobizides Mittel umfassend jeweils wenigstens einen Aldehyd, ein Ethercarboxylat und ein nichtionisches Tensid. Die Erfindung betrifft ferner eine Anwendungslösung umfassend dieses mikrobizide Mittel. Das erfindungsgemäße mikrobizide Mittel weist insbesondere eine hohe antimikrobielle Wirkung gegen Mykobakterien und viruzide sowie sporozide Aktivität auf. Das Mittel besitzt auch gegenüber anderen Keimen ein ausgeglichenes Wirkungsspektrum.

### Stand der Technik

Es ist bekannt, daß Aldehyde eine hohe antimikrobielle Aktivität aufweisen, weshalb ihre Zubereitungen bevorzugt zur Desinfektion in den Bereichen des Gesundheitswesens, der Industrie, etc. eingesetzt werden.

Oft werden Kombinationen von Aldehyden mit anderen Wirkstoffen, z.B. quaternären Ammoniumverbindungen eingesetzt, die jedoch nicht immer eine ausreichende Wirkung gegen Mykobakterien gewährleisten (Hygiene & Medizin 1995; 20 Nr. 12, S. 566). Zur Erreichung einer viruziden Wirkung ist nach dem Stand der Technik ferner eine Aktivierung durch Zusatz von Alkalien erforderlich.

Die US Patente US-3,968,248 und US 3,968,250 beschreiben Zusammensetzungen umfassend wässrige oder alkoholische Glutaraldehydlösungen enthaltend nichtionische und anionische Tenside zur Desinfektion bzw. Sterilisation von medizinischen Instrumenten bzw. Hühnereiern.

EP-A-0 251 743 beschreibt eine flüssige Zusammensetzung zur Sterilisierung umfassend ein nichtionisches Tensid mit 4 bis 12 Ethylenoxideinheiten pro Molekül, Glutaraldehyd und Triethylenglycol.

In DE 689 26 744 T2 werden Zubereitungen beschrieben, die neben Glutaraldehyd unter anderem auch anionische Tenside aus der Gruppe der Alkylsulfate, Alkylsulfonate und Alkylarylsulfonate enthalten und eine gute Wirkung gegen Mykobakterien aufweisen. Nachteilig ist die hohe Neigung der Schaumbildung solcher Mischungen, weshalb die genannten Zubereitungen auch in erster Linie der Vernichtung von Mykobakterien auf der lebenden Oberfläche, d.h. dem Zweck der Hautreinigung dienen.

Ethercarboxylate sind bekannt für ihre gute Reinigungswirkung bei geringer bis moderater Schaumneigung. In Form der freien Säuren können sie bei Anwesenheit weiterer organischer bzw. anorganischer Säuren auch antimikrobielle Eigenschaften entfalten, wie in der DE-OS-42 25 626 belegt. Beim Einsatz der freien Säuren stellt sich jedoch die starke Denaturierung und Fixierung von Proteinen im Falle von mit Blut kontaminierten Oberflächen als nachteilig heraus. Nicht zu unterschätzen ist das Korrosionspotential solcher Mischungen.

Für die Salze der Ethercarbonsäuren ist bisher keine antimikrobielle Aktivität belegt, mit Ausnahme des Falles, in dem das Kation selbst antimikrobiell aktiv ist.

Es war daher eine Aufgabe der vorliegenden Erfindung, ein Desinfektionsmittel auf der Basis von Aldehyden als Wirkstoff zu entwickeln, welches nur eine geringe Schaumentwicklung aufweist. Die Schaumentwicklung sollte bereits bei Raumtemperatur gebremst sein und sich bei Erwärmung der Lösung weiter verringern. Auf den Einsatz biologisch schwer oder nicht abbaubarer Schaumdämpfer, wie z.B. EO-PO Blockpolymere, Silikonderivate und Paraffinöl sowie biologisch inerter Netzmittel, wie Fluortenside sollte dabei verzichtet werden. Wesentliche Voraussetzung für die erfindungsgemäße Zusammensetzung sollte weiterhin eine ausgeprägte Wirkung gegen Mykobakterien sein, und zwar im quantitativen Suspensionstest mit *Mycobakterium terrae* (Hygiene & Medizin 1996; 21 Nr. 7/8, S. 375-380) sowie ferner eine viruzide Wirkung, ohne daß dem Desinfektionsmittel oder seinen Anwendungslösungen Aktivatoren in Form eines nachträglich separat zu dosierenden Produkts, z.B. Natriumhydrogencarbonat zugefügt werden müssen. Gleichzeitig sollte das Mittel aber auch wirksam gegen Bakterien und Pilze sein, und zwar geprüft nach den Richtlinien der DGHM (Deutsche Gesellschaft für Hygiene und Mikrobiologie) gegenüber *Staphylococcus aureus, Eschericia coli, Pseudomonas aeruginosa, Proteus mirabilis* und *Candida albicans*. Zudem sollte der pH-Wert des Mittels nur schwach sauer bzw. neutral eingestellt sein, um die Neigung der Proteinkoagulation des Mittels zu minimieren, eine effektive Reinigung zu ermöglichen und die Verträglichkeit des Mittels gegenüber den üblichen in der Medizin eingesetzten Materialien zu gewährleisten.

Die erfindungsgemäße Aufgabe wurde gelöst durch eine Zusammensetzung umfassend wenigstens einen Aldehyd, wenigstens ein Ethercarboxylat und wenigstens ein nichtionisches Tensid. Diese Zusammensetzung kann als Konzentrat vorliegen, welches in wässriger oder wässrig-alkoholischer Lösung zur Anwendung kommen kann (Anwendungslösung).

Dementsprechend betrifft die vorliegende Erfindung ein mikrobizides Mittel umfassend in wässriger Lösung als Konzentrat
(a) 0,1 bis 50 Gew.-% wenigstens eines aliphatischen, gesättigten Mono- und/oder Dialdehyds enthaltend bis zu 8 Kohlenstoffatome,
(b) 0,1 bis 60 Gew.-% wenigstens eines Ethercarboxylats der Formel I

   R¹(O-CH₂-CH₂-)ₖ-OCH₂COOM k = 0-12

   worin R¹ einen gesättigten oder ungesättigten, linearen oder verzweigten Alkylrest mit 4 bis 18 Kohlenstoffatomen oder einen Phenylalkylrest mit 10 bis 18 Kohlenstoffatomen und M ein einwertiges, zweiwertiges, dreiwertiges Metallkation und/oder ein Proton (H⁺) bedeutet,
(c) 0,1 bis 40 Gew.-% wenigstens eines nichtionischen Tensides der Formel II

   R²(O-CH₂-CH₂-)ₘ(O-CHR³-CH₂-)ₙ-OR⁴ m = 1-20; n = 0-20

   worin R² einen gesättigten oder ungesättigten, linearen oder verzweigten Alkylrest mit 4 bis 18 Kohlenstoffatomen oder einen Phenylalkylrest mit 10 bis 18 Kohlenstoffatomen, R³ Wasserstoff, eine Methyl- oder eine Ethylgruppe und R⁴ einen gesättigten, linearen oder verzweigten Alkylrest mit 1 bis 6 Kohlenstoffatomen bedeutet,
und die Gewichts%-Anteile auf die Gesamtmenge der wässrigen Lösung bezogen sind.

Das mikrobizide Mittel enthält im Konzentrat insgesamt wenigstens 10 Gew.-%, bezogen auf die Gesamtmenge des Konzentrats, die oben erwähnten Komponenten (a), (b), und (c).

Der zu 100 Gew.-% fehlende Teil wird durch die nachfolgend erwähnten optionalen Komponenten und Wasser ergänzt.

In einer bevorzugten Ausgestaltung ist das erfindungsgemäße Konzentrat, als auch die daraus hergestellte erfindungsgemäße Anwendungslösung, frei von EO-/PO-Blockpolymeren, Silikonderivaten und Paraffinölen sowie Fluortensiden, quaternären Ammoniumverbindungen und Alkalimetallhydroxiden und -carbonaten.

In dem erfindungsgemäßen mikrobiziden Mittel sind die Monound/oder Dialdehyde in einer Gesamtkonzentration vorzugsweise von 1 bis 30 Gew.-%, besonders bevorzugt in einer Konzentration von 5 bis 25 Gew.-%, bezogen auf die Gesamtmenge des Konzentrats, enthalten. Bevorzugt werden gesättigte Aldehyde/Dialdehyde mit bis zu 5 Kohlenstoffatomen eingesetzt. Beispielhaft seien Glutaraldehyd, Formaldehyd, Glyoxal, Succinaldehyd oder deren Mischungen als Aldehydkomponente erwähnt.

Die Ethercarboxylate der Formel I sind in dem erfindungsgemäßen mikrobiziden Mittel vorzugsweise in einer Gesamtkonzentration von 0,5 bis 35 Gew.-%, besonders bevorzugt in einer Konzentration von 5 bis 20 Gew.-%, bezogen auf die Gesamtmenge des Konzentrats, enthalten.

Bei den ein-, zwei- und dreiwertigen Metallionen kann es sich um Alkalimetall- oder Erdalkalimetallionen, aber auch um Zink- (Zn²⁺), Aluminium- (Al³⁺), Silber- (Ag⁺) oder Kupferionen (Cu⁺/Cu²⁺) handeln.

Vorzugsweise enthält der Alkylrest R¹ 6 bis 13, insbesondere bevorzugt 6 bis 10 Kohlenstoffatome. Bevorzugt nimmt k eine ganze Zahl zwischen 0 und 9, besonders bevorzugt zwischen 5 und 9 an. Ein bevorzugtes Ethercarboxylat ist Natrium C₈-Alkylethercarboxylat (9 EO) (Natrium Capryleth(9)carboxylat).

Die nichtionischen Tenside der Formel II sind in dem erfindungsgemäßen mikrobiziden Mittel vorzugsweise in einer Gesamtkonzentration von 0,1 bis 30 Gew.-%, besonders bevorzugt in einer Konzentration von 0,1 bis 20 Gew.-%, bezogen auf die Gesamtmenge des Konzentrats, enthalten. Bevorzugt nehmen n und m abhängig voneinander eine ganze Zahl zwischen 1 und 10 an.

Bei den besonders bevorzugten nichtionischen Tensiden handelt es sich um C₁₂₋₁₈ Fettalkoholalkoxylate (alkoxy = ethoxy und/oder propoxy), insbesondere um C₁₂₋₁₈ Fettalkoholethoxylate oder Gemische.

Das erfindungsgemäße mikrobizide Mittel kann ferner bis zu 50 Gew.-%, vorzugsweise bis zu 30 Gew.-%, bezogen auf die Gesamtmenge des Konzentrats, eines geradkettigen oder verzweigten gesättigten Alkohols mit bis zu 8 Kohlenstoffatomen enthalten. Bevorzugte Alkohole sind Ethanol, 1-Propanol und 2-Propanol.

Ferner kann das mikrobizide Mittel gemäß der Erfindung 0,1 bis 20 Gew.-%, vorzugsweise 0,5 bis 10 Gew.-% eines Puffersystems enthalten, welches das Konzentrat als auch die daraus herstellbare Anwendungslösung auf einem pH-Wert von 3,5 bis 7,0, vorzugsweise 4,0 bis 7,0 hält. Gegebenenfalls kann die Regulierung des pH-Werts durch Zusatz von Natrium- und/oder Kaliumhydroxid oder einer organischen Säure, z.B. Zitronensäure erfolgen.

Besonders bevorzugte Puffersysteme sind aufgebaut aus Salzen organischer Säuren und/oder Organophosphonsäuren, insbesondere Salzen der Essigsäure, Milchsäure, Citronensäure, Glukonsäure, Bernsteinsäure, Nitrilotriessigsäure, EDTA, Hydroxyethandiphosphonsäure, Phosphonobutantricarbonsäure, gegebenenfalls in Kombination mit deren entsprechenden Säuren.

Darüber hinaus kann das mikrobizide Mittel noch weitere übliche, nichtionische Tenside enthalten, die nicht unter die Definition der Tenside der Formel II fallen und die ausgewählt sind aus der Gruppe der Alkylglukoside, Alkylpolyglukoside, Alkylfettsäureamide und der Amidethercarboxylate, wobei die Alkylgruppe jeweils in dem für derartige Tenside üblichen Bereich von 8 bis 18 Kohlenstoffatomen aufweist. Diese weiteren, üblichen nichtionischen Tenside können in dem Konzentrat in einer Menge von bis zu 30 Gew.-%, vorzugsweise bis zu 10 Gew.-% enthalten sein.

Außerdem kann das mikrobizide Mittel gemäß der Erfindung übliche anionische Tenside als Netzmittel in einer Konzentration von bis zu 30 Gew.-%, vorzugsweise bis zu 5 Gew.-% enthalten. Bevorzugte anionische Tenside sind Alkylsulfosuccinate, Alkylsulfate, Alkylethersulfate, Alkylarylsulfonate und Alkylsulfonate oder deren Gemische.

Schließlich können dem mikrobiziden Mittel noch übliche Geruchskorrigentien (Parfüme), Farbstoffe und Korrosionsinhibitoren in einem Anteil von bis zu 5 Gew.-%, vorzugsweise bis zu 2 Gew.-% zugesetzt werden.

Das erfindungsgemäße mikrobizide Mittel kann als solches oder in Lösung in einem geeigneten Lösungsmittel oder Lösungsmittelgemisch zur Anwendung kommen. Dementsprechend betrifft die vorliegende Erfindung auch eine Anwendungslösung umfassend das oben beschriebene mikrobizide Mittel (Konzentrat) gelöst in einem geeigneten Lösungsmittel oder Lösungsmittelgemisch.

Die erfindungsgemäße Anwendungslösung enthält das oben beschriebene Konzentrat in einem Anteil von 0,1 bis 10 Vol.-%, vorzugsweise von 0,5 bis 10 Vol.-%, bezogen auf das Gesamtvolumen der Anwendungslösung (Anwendungskonzentration).

Als Lösungsmittel kommt Wasser oder auch ein Wasser/Alkoholgemisch in Frage, wobei als Alkohol vorzugsweise kurzkettige Alkohole mit einer Kettenlänge von 2 bis 3 Kohlenstoffatomen eingesetzt werden, insbesondere Ethanol, 1-Propanol oder 2-Propanol.

Im Falle der Verwendung eines Wasser/Alkoholgemisches kann die Anwendungslösung, bezogen auf deren Gesamtmenge, bis zu 70 Vol.-%, vorzugsweise bis zu 50 Vol.-% des Alkohols, vorzugsweise Ethanol enthalten.

Die Anwendungslösung weist einen pH-Wert von 3,5 bis 7,0, vorzugsweise von 4,0 bis 7,0 auf.

Das erfindungsgemäße mikrobizide Mittel besitzt eine sehr gute mikrobizide Wirkung gegen Mykobakterien und Viren, ohne daß die Wirksamkeit gegenüber Bakterien und Pilzen verringert ist.

Die erfindungsgemäßen mikrobiziden Mittel können in Form von ihren Konzentraten oder Verdünnungen (Anwendungslösungen) zur Desinfektion oder Sterilisation von unbelebten Oberflächen aller Art verwendet werden, insbesondere zur Desinfektion von chirurgischem Instrumentarium und Anästhesiematerialien, wie starren oder flexiblen Endoskopen. Die Desinfektion oder Sterilisation kann nach allen bekannten üblichen Verfahren durch Behandeln der Oberfläche mit der Zusammensetzung erfolgen. Gegebenenfalls können die Gegenstände im Ultraschallbad mit der Zusammensetzung behandelt werden.

Die vorliegende Erfindung wird durch die nachfolgenden Beispiele die den erfindungsgemäßen zusammensetzungen sehr ähnlich sind näher beschrieben.

### Beispiele:

Es wurden vier Rezepturen angesetzt. Rezeptur 1 und 2 entsprechen typischen derzeit im Markt befindlichen Produkten des Standes der Technik, sowohl mit als auch ohne quaternären Ammoniumverbindungen.

**Tabelle 1**

| Rezepturbestandteil (Gew.-%) | Rezeptur 1^{*)} | Rezeptur 2^{*)} | Rezeptur 3 | Rezeptur 4 |
|---|---|---|---|---|
| Glutaraldehyd | 14 | 3,5 | 9,5 | 9,5 |
| Glyoxal | 11 | 2,8 | -- | -- |
| Formaldehyd | -- | 4,5 | -- | 5,4 |
| Didecyldimethyloxyethylammoniumpropionat | -- | 7 | -- | -- |
| Na C₈ Alkylethercarboxylat 9 EO | -- | -- | 5 | 5 |
| C₁₃ Fettalkoholethoxylat 10 EO | 10 | 10 | 3 | 3 |
| C₁₂₋₁₈ Fettalkoholalkoxylat 6 EO 4 P0 | -- | -- | 2 | 2 |
| Propanol | 15 | 15 | 15 | 15 |
| Gereinigtes Wasser | ad 100 | ad 100 | ad 100 | ad 100 |

| | | | | |
|---|---|---|---|---|
| ^{*)} nicht nach der Erfindung | | | | |

Der pH-Wert der Rezepturen wurde jeweils in gleicher Weise auf 4,5 mit Natronlauge bzw. Zitronensäure eingestellt.

Die Rezepturen wurden zunächst auf die üblichen Anwendungskonzentrationen (AWK) verdünnt und diese verdünnten Lösungen dann auf ihre Wirksamkeit gegen Mykobakterien getestet. Die Ergebnisse sind nachfolgender Tabelle 2 zu entnehmen.

**Tabelle 2**

| *Mycobakterium terrae ATCC 15755* | | | | | |
|---|---|---|---|---|---|
| AWK (Vol.-%) | Einwirkzeit (min) | RF Rezeptur 1 | RF Rezeptur 2 | RF Rezeptur 3 | RF Rezeptur 4 |
| 1,0 | 60 | 0,21 | 0,37 | 2,10 | 2,94 |
| 1,5 | 60 | 0,37 | 0,59 | 4,03 | 5,35 |
| 2,0 | 30 | 0,31 | 0,28 | 3,11 | 3,73 |
| | 60 | 0,41 | 0,70 | 5,20 | 5,35 |
| 3,0 | 15 | 0,14 | 0,17 | 1,87 | 2,29 |
| | 30 | 0,36 | 0,46 | 4,48 | 5,15 |
| | 60 | 0,72 | 1,09 | n.d. | n.d. |
| 5,0 | 15 | 0,41 | 0,52 | 2,55 | 5,31 |
| Kontrolle WSH 6,31 | | | | | |
| Ausgang KBE-log/ml 9,37 | | | | | |
| RF Reduktionsfaktor, Logarithmus der Keimreduktion | | | | | |

Die Auswertung zeigt, daß Rezeptur 1 im quantitativen Suspensionsversuch nur eine geringe Wirksamkeit gegenüber *Mycobacterium terrae* aufweist. Dies trifft auch für Rezeptur 2 zu, welche zusätzlich Formaldehyd und eine quaternäre Ammoniumverbindung enthält. Erst mit der Einführung der Kombination Ethercarboxylat-nichtionisches Tensid läßt sich die Wirksamkeit signifikant steigern, obwohl der Gesamtaldehydanteil von Rezeptur 3 im Vergleich zu Rezeptur 1 nur noch 38% beträgt. Bemerkenswert fällt auch ein Vergleich von Rezeptur 2 und 4 aus, wenn man die Konzentrationen der vorrangig wirksamen Bestandteile, die Einwirkzeiten und Reduktionsfaktoren gegenüberstellt, wobei Rezeptur 2 der Vorteil einer signifikant höheren Anwendungskonzentration bei gleichlanger Einwirkzeit eingeräumt wird.

**Tabelle 3**

| Parameter | Rezeptur 2 | Rezeptur 4 |
|---|---|---|
| AWK (Vol.-%) | 3,0 | 1,5 |
| Aktivgehalte AWK | | |
| Gesamtaldehyd | 0,32% | 0,23% |
| quat. Verbindung | 0,21% | -- |
| quantitativer Suspensionsversuch | | |
| *M. Terrae* Einwirkzeit | 60 min | 60 min |
| | 1,09 | 5,35 |
| Reduktionsfaktor | | |

Aus der Übersicht ist ersichtlich, daß auch die Erhöhung von Einsatzkonzentrationen und Einwirkzeiten herkömmlicher dem Stand der Technik entsprechenden Rezepturen wie Rezeptur 2 nicht zwangsläufig zu einer Steigerung der Wirksamkeit gegen Mykobakterien führt.

Da sich die optimierte Rezeptur 4 offensichtlich als am wirksamsten gegen *Mycobacterium terrae* erwies, wurde diese auch gegenüber *Staphylococcus aureus* und *Pseudomonas aeruginosa* im quantitativen Suspensionsversuch getestet. Nachfolgend sind die Reduktionsfaktoren (RF) in einer Übersicht (Tabellen 4 und 5) zusammengefaßt:

**Tabelle 4**

| *Staphylococcus aureus ATCC 6538*: | | |
|---|---|---|
| AWK (Vol.-%) | Einwirkzeit (min) | RF Rezeptur 4 |
| 0,5 | 5 | 3,79 |
| | 15 | 5,76 |
| | 30 | 5,76 |
| | 60 | >5,76 |

**Tabelle 5**

| *Pseudomonas aeruginosa ATCC 15442*: | | |
|---|---|---|
| AWK (Vol.-%) | Einwirkzeit (min) | RF Rezeptur 4 |
| 0,5 | 5 | 2,88 |
| | 15 | 5,95 |
| | 30 | >5,95 |
| | 60 | >5,95 |

Zur Ergänzung wurde Rezeptur 4 auf Wirksamkeit gegenüber den Keimen *Eschericia coli, Proteus mirabilis* und *Candida albicans* untersucht. In Tabelle 6 folgen die Ergebnisse der qualitativen Suspensionsversuche:

**Tabelle 6**

| Keim | Einwirkzeit (min) | 0,5% AWK | 1,0% AWK | 1,5% AWK | 2,0% AWK |
|---|---|---|---|---|---|
| *E. coli* | 5 | + | + | + | + |
| | 15 | + | + | - | - |
| | 30 | - | - | - | - |
| | 60 | - | - | - | - |
| *P. mirabilis* | 5 | + | + | + | + |
| | 15 | + | + | - | - |
| | 30 | - | - | - | - |
| | 60 | - | - | - | - |
| *C. albicans* | 5 | + | + | - | - |
| | 15 | + | - | - | - |
| | 30 | - | - | - | - |
| | 60 | - | - | - | - |
| + = Wachstum - = kein Wachstum | | | | | |

Es zeigt sich, daß es sich bei dem erfindungsgemäßen Beispielsprodukt um ein mikrobizides Mittel mit ausgeglichenem Wirkungsspektrum handelt.

Die viruzide Wirkung eines erfindungsgemäßen Mittels wurde nach der Richtlinie des Bundesgesundheitsamtes (BGA) und der Deutschen Vereinigung zur Bekämpfung der Viruskrankheiten e.V. (DVV) gegenüber Polioviren, Papovaviren, Adenoviren, Vacciniaviren und Rotaviren nachgewiesen. Durch den Nachweis der Zerstörung des Oberflächenantigens des Hepatitis-B-Virus konnte eine Wirkung gegenüber Hepatitis B/HIV belegt werden.

Weiterhin wurde die sporozide Wirkung des erfindungsgemäßen Mittels nach der durch das Technische Komitee CEN/TC 216 "Chemische Desinfektionsmittel und Antiseptika" erstellten europäischen Pre-Norm (Basic method for testing sporocidal activity) quantitativ ermittelt. Danach bewirkte eine 8%ige Lösung innerhalb von 8 Stunden eine Reduktion der Sporen von Bacillus Subtilis ATCC 633 und Bacillus Cereus ATCC 12826 um mehr als 99.99%. Das Mittel enthielt unter anderem einen erhöhten Tensidanteil und war ohne Aktivierung wirksam.

Gegenüber den Rezepturen 1 und 2, welche in 1%-iger Lösung stark schäumten, zeigte das erfindungsgemäße Mittel nur eine geringe Schaumentwicklung, wobei der bei Raumtemperatur entwickelte Schaum innerhalb kurzer Zeit zusammenbrach.

## Patentansprüche

1. Mikrobizides Mittel umfassend in wässriger Lösung
(a) 0,1 bis 50 Gew.-% wenigstens eines aliphatischen, gesättigten Mono- und/oder Dialdehyds enthaltend bis zu 8 Kohlenstoffatome,
(b) 0,1 bis 60 Gew.-% wenigstens eines Ethercarboxylats der Formel I
R¹(O-CH₂-CH₂-)ₖ-OCH₂COOM k = 0-12
worin R¹ einen gesättigten oder ungesättigten, linearen oder verzweigten Alkylrest mit 4 bis 18 Kohlenstoffatomen oder einen Phenylalkylrest mit 10 bis 18 Kohlenstoffatomen und M ein einwertiges, zweiwertiges, dreiwertiges Metallkation und/oder ein Proton (H⁺) bedeutet,
(c) 0,1 bis 40 Gew.-% wenigstens eines nichtionischen Tensides der Formel II
R²(O-CH₂-CH₂-)ₘ(O-CHR³-CH₂-)ₙ-OR⁴ m = 1-20; n = 0-20
worin R² einen gesättigten oder ungesättigten, linearen oder verzweigten Alkylrest mit 4 bis 18 Kohlenstoffatomen oder einen Phenylalkylrest mit 10 bis 18 Kohlenstoffatomen, R³ Wasserstoff, eine Methyl- oder eine Ethylgruppe und R⁴ einen gesättigten, linearen oder verzweigten Alkylrest mit 1 bis 6 Kohlenstoffatomen bedeutet,
und die Gewichts%-Anteile auf die Gesamtmenge der wässrigen Lösung bezogen sind.

2. Mikrobizides Mittel nach Anspruch 1, **dadurch gekennzeichnet, daß** die wässrige Lösung insgesamt wenigstens 10 Gew.-% der Komponenten (a), (b) und (c) umfasst.

3. Mikrobizides Mittel nach Anspruch 1 oder 2, **dadurch gekennzeichnet, daß** der Mono- oder Dialdehyd bis zu 5 Kohlenstoffatome enthält.

4. Mikrobizides Mittel nach Anspruch 1 - 3, **dadurch gekennzeichnet, daß** es zusätzlich einen geradkettigen oder verzweigten Alkohol mit bis zu 8 Kohlenstoffatomen enthält.

5. Mikrobizides Mittel nach Anspruch 1 - 4, **dadurch gekennzeichnet, daß** es zusätzlich 0,1 bis 20 Gew.-% eines Puffersystems enthält.

6. Mikrobizides Mittel nach Anspruch 1 - 5, **dadurch gekennzeichnet, daß** es einen pH-Wert von 3,5 - 7,0 aufweist.

7. Mikrobizides Mittel nach Anspruch 1 - 6, **dadurch gekennzeichnet, daß** es zusätzlich bis zu 30 Gew.-% anionische Tenside enthält.

8. Mikrobizides Mittel nach Anspruch 1 - 7, **dadurch gekennzeichnet, daß** es zusätzlich bis zu 30 Gew.-% nichtionische Tenside enthält, die nicht aus der durch Formel II definierten Gruppe ausgewählt ist.

9. Mikrobizides Mittel nach Anspruch 1 - 8, **dadurch gekennzeichnet, daß** es zusätzlich bis zu 5 Gew.-% Korrosionsinhibitoren, Farbstoffe und Geruchskorrigenzien enthält.

10. Anwendungslösung umfassend das mikrobizide Mittel gemäß irgendeinem der Ansprüche 1 - 9 in wässriger oder wässrig/alkoholischer Lösung.

11. Anwendungslösung gemäß Anspruch 10, **dadurch gekennzeichnet, daß** in der wässrig/alkoholischen Lösung ein einwertiger Alkohol mit zwei oder drei Kohlenstoffatomen eingesetzt wird.

12. Anwendungslösung gemäß Anspruch 10 oder 11, **dadurch gekennzeichnet, daß** sie das mikrobizide Mittel gemäß irgendeinem der Ansprüche 1 bis 7 in einem Anteil von 0,1 bis 10 Vol.-% aufweist.

13. Anwendungslösung gemäß irgendeinem der Ansprüche 10 - 12, **dadurch gekennzeichnet, daß** sie den Alkohol in einem Anteil von bis zu 70 Vol.-% enthält.

14. Anwendungslösung gemäß irgendeinem der Ansprüche 10 - 13, **dadurch gekennzeichnet, daß** es einen pH-Wert von 3,5 bis 7,0 aufweist.

15. Verwendung des mikrobiziden Mittels gemäß irgendeinem der Ansprüche 1 - 9 und der Anwendungslösung gemäß irgendeinem der Ansprüche 10 - 14 zur Desinfektion oder Sterilisation von unbelebten Oberflächen.

## Claims

1. A microbicidal agent, comprising in an aqueous solution:
(a) from 0.1 to 50% by weight of at least one aliphatic saturated mono- and/or dialdehyde containing up to 8 carbon atoms;
(b) from 0.1 to 60% by weight of at least one ether carboxylate of formula I:
R¹(O-CH₂-CH₂-)ₖ-OCH₂COOM k = 0-12
wherein R¹ represents a saturated or unsaturated, linear or branched alkyl residue with from 4 to 18 carbon atoms or a phenylalkyl residue with from 10 to 18 carbon atoms, and M represents a monovalent, divalent, trivalent metal cation and/or a proton (H⁺);
(c) from 0.1 to 40% by weight of at least one non-ionic surfactant of formula II:
R²(O-CH₂-CH₂-)ₘ(O-CHR³-CH₂-)ₙ-OR⁴ m = 1-20; n = 0-20
wherein R² represents a saturated or unsaturated, linear or branched alkyl residue with from 4 to 18 carbon atoms or a phenylalkyl residue with from 10 to 18 carbon atoms, R³ represents hydrogen, a methyl or ethyl group, and R⁴ represents a saturated, linear or branched alkyl residue with from 1 to 6 carbon atoms;
the weight percents being based on the total quantity of the aqueous solution.

2. The microbicidal agent according to claim 1, **characterized in that** said aqueous solution comprises at least 10% by weight of the total of components (a), (b) and (c).

3. The microbicidal agent according to claim 1 or 2, **characterized in that** said mono- or dialdehyde contains up to 5 carbon atoms.

4. The microbicidal agent according to claims 1 to 3, **characterized by** additionally containing a linear or branched alcohol with up to 8 carbon atoms.

5. The microbicidal agent according to claims 1 to 4, **characterized by** additionally containing from 0.1 to 20% by weight of a buffer system.

6. The microbicidal agent according to claims 1 to 5, **characterized by** having a pH value of from 3.5 to 7.0.

7. The microbicidal agent according to claims 1 to 6, **characterized by** additionally containing up to 30% by weight of anionic surfactants.

8. The microbicidal agent according to claims 1 to 7, **characterized by** additionally containing up to 30% by weight of non-ionic surfactants which are not selected from the group defined by formula II.

9. The microbicidal agent according to claims 1 to 8, **characterized by** additionally containing up to 5% by weight of corrosion inhibitors, colorants and odor corrigents.

10. An application solution comprising the microbicidal agent according to any of claims 1 to 9 in an aqueous or aqueous/alcoholic solution.

11. The application solution according to claim 10, **characterized in that** a monohydric alcohol containing two or three carbon atoms is employed in said aqueous/alcoholic solution.

12. The application solution according to claim 10 or 11, **characterized by** comprising the microbicidal agent according to any of claims 1 to 7 in a proportion of from 0.1 to 10% by volume.

13. The application solution according to any of claims 10 to 12, **characterized by** containing said alcohol in a proportion of up to 70% by volume.

14. The application solution according to any of claims 10 to 13, **characterized by** having a pH value of from 3.5 to 7.0.

15. Use of the microbicidal agent according to any of claims 1 to 9 and of the application solution according to any of claims 10 to 14 for the disinfection or sterilization of non-living surfaces.

## Revendications

1. Agent microbicide comprenant, en solution aqueuse
(a) 0,1 à 50 % en poids d'au moins un mono- et/ou dialdéhyde aliphatique saturé contenant jusqu'à 8 atomes de carbone,
(b) 0,1 à 60 % en poids d'au moins un éthercarboxylate de formule I
R¹(O-CH₂-CH₂-)ₖ-OCH₂COOM k = 0-12
où R¹ est un radical alkyle saturé ou insaturé, linéaire ou ramifié, avec 4 à 18 atomes de carbone, ou un radical phénylalkyle avec 10 à 18 atomes de carbone, et M est un cation métallique monovalent, divalent ou trivalent et/ou un proton (H⁺),
(c) 0,1 à 40 % en poids d'au moins un tensioactif non ionique de formule II
R²(O-CH₂-CH₂-)ₘ(O-CHR³-CH₂-)ₙ-OR⁴ m = 1-20 ; n = 0-20
où R² représente un radical alkyle saturé ou insaturé, linéaire ou ramifié, avec 4 à 18 atomes de carbone, ou un radical phénylalkyle avec 10 à 18 atomes de carbone, R³ représente l'hydrogène, un groupe méthyle ou éthyle et R⁴ représente un radical alkyle saturé, linéaire ou ramifié, avec 1 à 6 atomes de carbone,
les pourcentages en poids se rapportant à la quantité totale de la solution aqueuse.

2. Agent microbicide selon la revendication 1, **caractérisé en ce que** la solution aqueuse comprend au total au moins 10 % en poids des composants (a), (b) et (c).

3. Agent microbicide selon la revendication 1 ou 2, **caractérisé en ce que** le mono- ou le dialdéhyde contient jusqu'à 5 atomes de carbone.

4. Agent microbicide selon la revendication 1 à 3, **caractérisé en ce qu'**il contient en outre un alcool linéaire ou ramifié comportant jusqu'à 8 atomes de carbone.

5. Agent microbicide selon la revendication 1 à 4, **caractérisé en ce qu'**il contient en outre 0,1 à 20 % en poids d'un système tampon.

6. Agent microbicide selon la revendication 1 à 5, **caractérisé en ce qu'**il présente une valeur de pH comprise entre 3,5 et 7,0.

7. Agent microbicide selon la revendication 1 à 6, **caractérisé en ce qu'**il contient en outre jusqu'à 30 % en poids de tensioactifs anioniques.

8. Agent microbicide selon la revendication 1 à 7, **caractérisé en ce qu'**il contient en outre jusqu'à 30 % en poids de tensioactifs non ioniques qui ne sont pas sélectionnés choisis dans le groupe défini par la formule II.

9. Agent microbicide selon la revendication 1 à 8, **caractérisé en ce qu'**il contient en outre jusqu'à 5 % en poids d'inhibiteurs de corrosion, de colorants et de correcteurs d'odeur.

10. Solution d'application comprenant l'agent microbicide selon l'une quelconque des revendications 1 à 9 en solution aqueuse ou aqueuse/alcoolique.

11. Solution d'application selon la revendication 10, **caractérisée en ce que** dans la solution aqueuse/alcoolique est utilisé un alcool monovalent comportant deux ou trois atomes de carbone.

12. Solution d'application selon la revendication 10 ou 11, **caractérisée en ce que** l'agent microbicide selon l'une quelconque des revendications 1 à 7 est présent selon une proportion comprise entre 0,1 et 10 % en volume.

13. Solution d'application selon l'une quelconque des revendications 10 à 12, **caractérisée en ce qu'**elle contient l'alcool dans une proportion allant jusqu'à 70 % en volume.

14. Solution d'application selon l'une quelconque des revendications 10 à 13, **caractérisée en ce qu'**elle présente une valeur de pH de 3,5 à 7,0.

15. Utilisation de l'agent microbicide selon l'une quelconque des revendications 1 à 9 et de la solution d'application selon l'une quelconque des revendications 10 à 14 pour la désinfection ou la stérilisation de surfaces inanimées.
